# FASCICULE DE BREVET EUROPEEN

(11) **EP 3 853 039 B1**
(45) Date de publication et mention de la délivrance du brevet: **27.07.2022**
(21) Numéro de dépôt: 19787034.8
(22) Date de dépôt: 12.09.2019
(51) Int. Cl.: B60C 1/00, C08L 7/00, C08L 63/00, C08K 5/18, C08K 3/04, C08K 5/34

(54) **COMPOSITION DE CAOUTCHOUC A BASE DE RÉSINE ÉPOXYDE, D'UN DURCISSEUR AMINÉ ET D'UN IMIDAZOLE**
KAUTSCHUKZUSAMMENSETZUNG AUF EPOXIDHARZBASIS, AMINHÄRTER UND IMIDAZOL
RUBBER COMPOSITION BASED ON EPOXY RESIN, AN AMINE HARDENER AND AN IMIDAZOLE

(30) Priorité: 17.09.2018 FR 1858347
(43) Date de publication de la demande: 28.07.2021
(73) Titulaire: COMPAGNIE GENERALE DES ETABLISSEMENTS MICHELIN, 63000 Clermont-Ferrand (FR)
(72) Inventeur: LANDREAU, Emmanuel, 63040 CLERMONT-FERRAND CEDEX 9 (FR); FLEURY, Etienne, 63040 CLERMONT-FERRAND CEDEX 9 (FR)
(74) Mandataire: Louret, Sylvain
(86) Numéro de dépôt international: PCT/FR2019/052117
(87) Numéro de publication internationale: WO 2020/058604

(56) Documents cités:
- WO-A1-2014/095588
- WO-A1-2018/002538

## Description

### DOMAINE DE L'INVENTION

La présente invention est relative à des compositions de caoutchouc destinées notamment à la fabrication de pneumatiques ou de produits semi-finis pour pneumatiques. La présente invention a également pour objet un article de caoutchouc fini ou semi-fini comprenant une composition de caoutchouc selon l'invention, ainsi qu'un pneumatique comprenant au moins une composition selon l'invention.

### ÉTAT DE L'ART

Il est connu d'utiliser dans certaines parties des pneumatiques, des compositions de caoutchouc présentant une forte rigidité lors de faibles déformations du pneumatique comme présentées dans la demande WO 02/10269. La résistance aux faibles déformations est une des propriétés que doit présenter un pneumatique pour répondre aux sollicitations auxquelles il est soumis.

Cette rigidification peut être obtenue en augmentant le taux de charge renforçante ou en incorporant certaines résines renforçantes dans les compositions de caoutchouc constitutives des parties du pneumatique.

Les résines renforçantes classiquement utilisées pour augmenter la rigidité des compositions sont des résines renforçantes à base d'un système accepteur/donneur de méthylène. Les termes « accepteur de méthylène » et « donneur de méthylène » sont bien connus de l'homme du métier et largement utilisés pour désigner des composés aptes à réagir ensemble pour générer par condensation une résine renforçante tridimensionnelle qui vient se superposer, s'interpénétrer avec le réseau charge renforçante/élastomère d'une part, avec le réseau élastomère/soufre d'autre part (si l'agent de réticulation est le soufre). Classiquement, l'accepteur de méthylène est une résine phénolique. Des résines phénoliques novolaques, ont déjà été décrites dans des compositions de caoutchouc, notamment destinées à des pneumatiques ou des bandes de roulement de pneumatiques, pour des applications aussi variées qu'adhésion ou renforcement : on se reportera par exemple au brevet EP 0 649 446.

A l'accepteur de méthylène précédemment décrit est associé un agent durcisseur, apte à le réticuler ou durcir, encore appelé communément « donneur de méthylène ». La réticulation de la résine est alors provoquée lors de la cuisson de la matrice de caoutchouc, par formation de ponts méthylène entre les carbones en positions ortho et para des noyaux phénoliques de la résine et le donneur de méthylène, créant ainsi un réseau de résine tridimensionnel. Les donneurs de méthylène classiquement utilisés sont de l'hexaméthylènetétramine (en abrégé HMT), ou l'hexaméthoxyméthylmélamine (en abrégé HMMM ou H3M), ou l'hexaéthoxyméthylmélamine.

Toutefois, la combinaison d'une résine phénolique, accepteur de méthylène avec l'HMT ou l'H3M donneur de méthylène, produit du formaldéhyde au cours de la réticulation de la composition de caoutchouc. Or, il est souhaitable de diminuer, voire de supprimer à terme le formaldéhyde des compositions de caoutchouc en raison de l'impact environnemental potentiel de ces composés.

A cet effet, des compositions alternatives aux compositions comprenant le couple résine formo-phénolique accepteur de méthylène avec un durcisseur HMT ou H3M donneur de méthylène classiques ont été développées. A titre d'exemple, la demande WO 2011/045342 décrit des compositions comprenant un couple résine époxyde avec un durcisseur aminé. Ces compositions, outre l'avantage de s'affranchir de la formation de formaldéhyde, présentent après réticulation des rigidités supérieures aux compositions conventionnelles tout en conservant une résistance au roulement acceptable. La demande WO 2018/002538 décrit des compositions comprenant une résine époxyde et un durcisseur aminé qui vise à améliorer le compromis processabilité (en particulier le temps de grillage) / rigidité par rapport aux compositions connues.

Toutefois, il est toujours souhaitable de pouvoir ajuster la rigidité des compositions de caoutchouc sur l'ensemble des températures de fonctionnement du pneumatique.

De manière inattendue, la Demanderesse a découvert lors de ses recherches que la combinaison d'une résine époxyde, d'un durcisseur aminé et d'un imidazole permet de s'affranchir de la formation de formaldéhyde tout en maintenant les propriétés de rigidité aux différentes températures de fonctionnement du pneumatique, voire même en les améliorant.

### DÉFINITIONS

Par l'expression "partie en poids pour cent parties en poids d'élastomère" (ou pce), il faut entendre au sens de la présente invention, la partie, en masse pour cent parties en masse d'élastomère ou de caoutchouc.

Dans la présente, sauf indication expresse différente, tous les pourcentages (%) indiqués sont des pourcentages (%) en masse.

D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Par l'expression "composition à base de", il faut entendre une composition comprenant le mélange et/ou le produit de réaction *in situ* des différents constituants utilisés, certains de ces constituants pouvant réagir et/ou étant destinés à réagir entre eux, au moins partiellement, lors des différentes phases de fabrication de la composition ; la composition pouvant ainsi être à l'état totalement ou partiellement réticulé ou à l'état non-réticulé.

Lorsqu'on fait référence à un composé "majoritaire", on entend au sens de la présente invention, que ce composé est majoritaire parmi les composés du même type dans la composition, c'est-à-dire que c'est celui qui représente la plus grande quantité en masse parmi les composés du même type. Ainsi, par exemple, un élastomère majoritaire est l'élastomère représentant la plus grande masse par rapport à la masse totale des élastomères dans la composition. De la même manière, une charge dite majoritaire est celle représentant la plus grande masse parmi les charges de la composition. A titre d'exemple, dans un système comprenant un seul élastomère, celui-ci est majoritaire au sens de la présente invention ; et dans un système comprenant deux élastomères, l'élastomère majoritaire représente plus de la moitié de la masse des élastomères. Au contraire, un composé "minoritaire" est un composé qui ne représente pas la fraction massique la plus grande parmi les composés du même type. De préférence par majoritaire, on entend présent à plus de 50%, de préférence plus de 60%, 70%, 80%, 90%, et plus préférentiellement le composé « majoritaire » représente 100%.

Les composés comprenant du carbone mentionnés dans la description, peuvent être d'origine fossile ou biosourcés. Dans ce dernier cas, ils peuvent être, partiellement ou totalement, issus de la biomasse ou obtenus à partir de matières premières renouvelables issues de la biomasse. Sont concernés notamment les polymères, les plastifiants, les charges, etc.

### DESCRIPTION DE L'INVENTION

### Elastomère diénique

La composition selon l'invention comprend au moins un élastomère diénique. Elle peut donc contenir un seul élastomère diénique ou un mélange de plusieurs élastomères diéniques.

Par élastomère (ou indistinctement caoutchouc) "diénique", qu'il soit naturel ou synthétique, doit être compris de manière connue un élastomère constitué au moins en partie (i.e., un homopolymère ou un copolymère) d'unités monomères diènes (monomères porteurs de deux doubles liaisons carbone-carbone, conjuguées ou non).

Ces élastomères diéniques peuvent être classés dans deux catégories : "essentiellement insaturés" ou "essentiellement saturés". On entend en général par "essentiellement insaturé", un élastomère diénique issu au moins en partie de monomères diènes conjugués, ayant un taux de motifs ou unités d'origine diénique (diènes conjugués) qui est supérieur à 15% (% en moles) ; c'est ainsi que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques "essentiellement saturés" (taux de motifs d'origine diénique faible ou très faible, toujours inférieur à 15%). Les élastomères diéniques compris dans la composition selon l'invention sont préférentiellement essentiellement insaturés.

On entend particulièrement par élastomère diénique susceptible d'être utilisé dans les compositions conformes à l'invention :
(a) tout homopolymère d'un monomère diène, conjugué ou non, ayant de 4 à 18 atomes de carbone ;
(b) tout copolymère d'un diène, conjugué ou non, ayant de 4 à 18 atomes de carbone et d'au moins un autre monomère.

L'autre monomère peut être l'éthylène, une oléfine ou un diène, conjugué ou non.

A titre de diènes conjugués conviennent les diènes conjugués ayant de 4 à 12 atomes de carbone, en particulier les 1,3-diènes, tels que notamment le 1,3-butadiène et l'isoprène.

A titre d'oléfines conviennent les composés vinylaromatiques ayant de 8 à 20 atomes de carbone et les α-monooléfines aliphatiques ayant de 3 à 12 atomes de carbone.

A titre de composés vinylaromatiques conviennent par exemple le styrène, l'ortho-, méta-, para-méthylstyrène, le mélange commercial "vinyle-toluène", le para-tertiobutylstyrène.

A titre d'α-monooléfines aliphatiques conviennent notamment les α-monooléfines aliphatiques acycliques ayant de 3 à 18 atomes de carbone.

Préférentiellement, l'élastomère diénique est choisi dans le groupe constitué par les polybutadiènes (BR), le caoutchouc naturel (NR), les polyisoprènes de synthèse (IR), les copolymères de butadiène, les copolymères d'isoprène, et les mélanges de ces élastomères. Les copolymères de butadiène sont particulièrement choisis dans le groupe constitué par les copolymères de butadiène-styrène (SBR).

De manière préférée, l'élastomère diénique est un élastomère isoprénique.

Par "élastomère isoprénique", on entend de manière connue un homopolymère ou un copolymère d'isoprène, en d'autres termes un élastomère diénique choisi dans le groupe constitué par le caoutchouc naturel (NR), les polyisoprènes de synthèse (IR), les différents copolymères d'isoprène et les mélanges de ces élastomères. Parmi les copolymères d'isoprène, on citera en particulier les copolymères d'isobutène-isoprène (caoutchouc butyle - IIR), d'isoprène-styrène (SIR), d'isoprène-butadiène (BIR) ou d'isoprène-butadiène-styrène (SBIR). Cet élastomère isoprénique est de préférence choisi dans le groupe constitué par le caoutchouc naturel, les polyisoprènes cis-1,4 de synthèse et leurs mélanges; parmi ces polyisoprènes de synthèse, sont utilisés de préférence des polyisoprènes ayant un taux (% molaire) de liaisons cis-1,4 supérieur à 90%, plus préférentiellement encore supérieur à 98%. De manière préférée et selon l'un quelconque des arrangements de la présente, l'élastomère diénique est le caoutchouc naturel.

Préférentiellement le taux d'élastomère diénique, de préférence d'élastomère isoprénique, de préférence le caoutchouc naturel, est de 50 à 100 pce, plus préférentiellement de 60 à 100 pce, de manière plus préférentielle de 70 à 100 pce, plus préférentiellement encore de 80 à 100 pce et de manière très préférentielle de 90 à 100 pce. En particulier le taux d'élastomère diénique, de préférence d'élastomère isoprénique, de préférence encore de caoutchouc naturel, est très préférentiellement de 100 pce.

Qu'elle contienne un seul élastomère diénique ou un mélange de plusieurs élastomères diéniques, la composition de caoutchouc selon l'invention peut également contenir de manière minoritaire tout type d'élastomère synthétique autre que diénique, voire des polymères autres que des élastomères, par exemple des polymères thermoplastiques. De préférence, la composition de caoutchouc selon l'invention ne contient pas d'élastomère synthétique autre que diénique ni de polymère autre que des élastomères ou en contient moins de 10 pce, de préférence moins de 5 pce.

### Résine époxyde

Les résines époxydes utilisables dans la présente invention incluent tous les composés polyépoxydes. Il peut s'agir par exemple des résines époxydes aromatiques, époxydes alicycliques, et époxydes aliphatiques. Par exemple, la résine époxyde aromatique peut être une résine époxyde amine-aromatique. Les résines époxydes sont préférentiellement des résines époxydes novolaques, c'est-à-dire des résines époxydes obtenues par catalyse acide, par opposition aux résines résols, obtenues par catalyse basique.

En particulier, parmi les résines époxydes aromatiques, sont préférées les résines époxydes choisies dans le groupe constitué par le 2,2 bis[4-(glycidyloxy) phényl] propane, le poly[(o-crésylglycidyl éther)-co-formaldéhyde], le poly[(phénylglycidyl éther)-co-formaldéhyde], le poly[(phenylglycidyl éther)-co(hydroxybenzaldehyde glycidyl éther)], les résines époxydes amines aromatiques et le mélanges de ces composés, et de manière préférée les résines époxydes choisies dans le groupe constitué par le poly[(o-crésylglycidyl éther)-co-formaldéhyde, et le poly[(phenylglycidyl éther)-co(hydroxybenzaldehyde glycidyl éther)]. De préférence encore, la résine époxyde est choisie dans le groupe constitué par le poly[o-crésylglycidyl éther)-co-formaldéhyde], le poly[o-phénylglycidyl éther)-co-formaldéhyde], les résines époxydes amines aromatiques et le mélanges de ces composés.

A titre d'exemple de résines époxydes disponibles dans le commerce et utilisables dans le cadre de la présente invention, on peut citer par exemple la résine époxyde «DEN 439 » de la société Uniqema, la résine époxyde « Tris(4-hydroxyphenyl)methane triglycidyl ether » de la société Sigma-Aldrich, la résine époxy crésol novolaque araldite ECN 1299 de la société Hunstman.

La composition selon l'invention comprend entre 1 et 30 pce de résine époxyde. Compte tenu du durcisseur aminé utilisé dans le cadre de la présente invention, en dessous du taux minimum de résine indiqué, l'effet technique visé est insuffisant, alors qu'au-delà du maximum indiqué, on s'expose à des risques d'augmentation trop importante de la rigidité et de pénalisation excessive de l'hystérèse et des propriétés d'extensibilité du matériau. Pour toutes ces raisons, le taux de résine époxyde est préférentiellement compris entre 10 et 25 pce. De préférence encore, le taux de résine époxyde dans la composition selon l'invention est compris entre 10 et 20 pce.

### Durcisseur aminé

La résine époxyde de la composition de l'invention est associée à un durcisseur aminé particulier qui permet la réticulation de la résine.

Selon l'invention, le durcisseur aminé comprend au moins deux fonctions amines primaires, situées sur au moins un (c'est-à-dire un ou plusieurs) cycle aromatique à six atomes, ledit au moins un cycle aromatique à six atomes comprenant :
- au moins une fonction amine primaire, et
- au moins deux radicaux Ri, identiques ou différents, choisis dans le groupe constitué par les radicaux alkyles linéaires ou ramifiés en C1-C6, les halogènes, et les éthers, les amines tertiaires, les thio-éthers, les cétones, les esters et les amides, substitués par des radicaux alkyles linéaires ou ramifiés en C1-C6,
de telle sorte que l'au moins un cycle aromatique à six atomes ne comprenne pas d'atome d'hydrogène situé en position ortho par rapport aux fonctions amines primaires.

En d'autres termes, le durcisseur aminé comprend un ou plusieurs cycles aromatiques à six atomes et au moins deux fonctions amines primaires, situées sur un seul ou réparties sur plusieurs de ces cycles aromatiques à six atomes.

De manière bien connue de l'homme du métier, on entend par fonction amine primaire une fonction aminée dans laquelle l'atome d'azote est lié à deux atomes d'hydrogène.

De préférence, le durcisseur aminé comprend de 1 à 3, de préférence encore 1 ou 2 cycles aromatiques à six atomes.

De préférence, le durcisseur aminé comprend de 2 à 4, de préférence encore 2 fonctions amines primaires situées sur au moins un cycle aromatique à six atomes du durcisseur aminé.

Parmi les halogènes susceptibles de constituer les radicaux Ri, on peut citer les atomes de fluor, de chlore, de brome ou d'iode. De préférence, les halogènes sont choisis dans le groupe constitué par les atomes de chlore et de brome, de préférence encore les halogènes sont des atomes de chlore.

Selon un premier mode de réalisation de la présente invention, le durcisseur aminé peut comprendre un cycle aromatique à six atomes comprenant :
- au moins deux fonctions amines primaire, et
- au moins deux radicaux Ri, identiques ou différents, choisis dans le groupe constitué par les radicaux alkyles linéaires ou ramifiés en C1-C6, les halogènes, et les éthers, les amines tertiaires, les thio-éthers, les cétones, les esters et les amides, substitués par des radicaux alkyles linéaires ou ramifiés en C1-C6,
de sorte que ledit cycle ne comprenne pas d'atome d'hydrogène situé en position ortho par rapport aux fonctions amines primaires.

Selon un deuxième mode de réalisation de la présente invention, le durcisseur aminé peut également comprendre au moins deux cycles aromatiques à six atomes, identiques ou différents, lesdits cycles comprenant chacun :
- au moins une fonction amine primaire, et
- au moins deux radicaux Ri, identiques ou différents, choisis dans le groupe constitué par les radicaux alkyles linéaires ou ramifiés en C1-C6, les halogènes, et les éthers, les amines tertiaires, les thio-éthers, les cétones, les esters et les amides, substitués par des radicaux alkyles linéaires ou ramifiés en C1-C6,
de telle sorte que lesdits cycles ne comprennent pas d'atome d'hydrogène situé en position ortho par rapport aux fonctions amines primaires.

Selon un autre mode de réalisation, le durcisseur aminé peut également comprendre plusieurs cycles aromatiques à six atomes et au moins deux fonctions amines primaires situées uniquement sur l'un des cycles aromatiques.

Lorsque le durcisseur aminé comprend plusieurs (c'est-à-dire au moins deux) cycles aromatiques à six atomes, ces cycles peuvent être identiques ou différents. Ils peuvent par exemple différer les uns des autres par la nature des atomes constituant lesdits cycles et/ou par le nombre de fonctions amines primaires situées sur lesdits cycles et/ou par la nature et/ou le nombre des radicaux Ri disposés sur lesdits cycles et/ou par la position des fonctions amines primaires et radicaux Ri sur lesdits cycles. De préférence, lorsque le durcisseur aminé comprend plusieurs cycles aromatiques à six atomes, ces cycles sont identiques.

Comme indiqué ci-dessus, le durcisseur aminé comprend au moins deux radicaux Ri, identiques ou différents, choisis dans le groupe constitué par les radicaux alkyles linéaires ou ramifiés en C1-C6, les halogènes, et les éthers, les amines tertiaires, les thio-éthers, les cétones, les esters et les amides, substitués par des radicaux alkyles linéaires ou ramifiés en C1-C6. Dans l'expression «les éthers, les amines tertiaires, les thio-éthers, les cétones, les esters et les amides, substitués par des radicaux alkyles linéaires ou ramifiés en C1-C6 », l'homme du métier comprend bien que les termes « substitués par des radicaux alkyles linéaires ou ramifiés en C1-C6 » se rapportent à chacun des éthers, amines tertiaires, thio-éthers, cétones, esters et amides.

Quel que soit le mode de réalisation de la présente invention, le durcisseur aminé comprend préférentiellement au moins deux radicaux Ri, identiques ou différents, choisis dans le groupe constitué par les radicaux alkyles linéaires ou ramifiés en C1-C6, les halogènes, et les éthers, les amines tertiaires, les thio-éthers, substitués par des radicaux alkyles linéaires ou ramifiés en C1-C6. De préférence encore le durcisseur aminé comprend au moins deux radicaux Ri, identiques ou différents, choisis dans le groupe constitué par les radicaux alkyles linéaires ou ramifiés en C1-C6, les halogènes, et les thio-éthers substitués par des radicaux alkyles linéaires ou ramifiés en C1-C6.

Quel que soit le mode de réalisation de la présente invention, les radicaux Ri, identiques ou différents, sont très préférentiellement choisis dans le groupe constitué par les radicaux alkyles linéaires ou ramifiés en C1-C6. En d'autres termes, tous les radicaux Ri du durcisseur aminé peuvent être des radicaux alkyles linéaires ou ramifiés en C1-C6, les radicaux alkyles linéaires ou ramifiés en C1-C6 étant de préférence choisis dans le groupe constitué par les radicaux méthyle, éthyle et propyle.

Quel que soit le mode de réalisation de la présente invention, l'au moins un cycle aromatique à six atomes du durcisseur aminé peut comprendre au moins deux radicaux Ri, identiques ou différents, choisis dans le groupe constitué par les halogènes, et les éthers, les amines tertiaires et les thio-éthers, substitués par des radicaux alkyles linéaires ou ramifiés en C1-C6, et au moins un radical Ri choisi dans le groupe constitué par les radicaux alkyles linéaires ou ramifiés en C1-C6.

Quel que soit le mode de réalisation de la présente invention, qu'il s'agisse des radicaux Ri, ou des radicaux des éthers, amines tertiaires, thio-éthers, cétones, esters ou amides, les radicaux alkyles linéaires ou ramifiés en C1-C6 peuvent être choisis dans le groupe constitué par les radicaux méthyle, éthyle, propyle, isopropyle, isobutyle et butyle. De préférence, les radicaux alkyles linéaires ou ramifiés en C1-C6 sont choisis dans le groupe constitué par les radicaux méthyle, éthyle et propyle. De préférence encore, les radicaux alkyles linéaires ou ramifiés en C1-C6 sont choisis dans le groupe constitué par les radicaux méthyle et éthyle.

Quel que soit le mode de réalisation de la présente invention, les atomes des cycles aromatiques du durcisseur aminé peuvent être des atomes de carbone, et éventuellement comprendre des atomes d'azote. De préférence, tous les atomes des cycles aromatiques du durcisseur aminé sont des atomes de carbone. En d'autres termes, les cycles aromatiques à six atomes du durcisseur aminé sont préférentiellement des cycles aromatiques à six atomes de carbone.

Dans les formules (I) à (V) présentées ci-après, il est rappelé que les radicaux Ri peuvent être identiques ou différents.

Selon un mode de réalisation de la présente invention, le durcisseur aminé répond à la formule (I) :

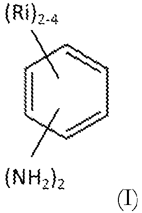

De préférence, selon ce mode de réalisation, le durcisseur aminé répond à la formule (II) :

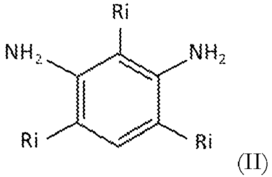

Selon un autre mode de réalisation de la présente invention, le durcisseur aminé répond à la formule (III) : 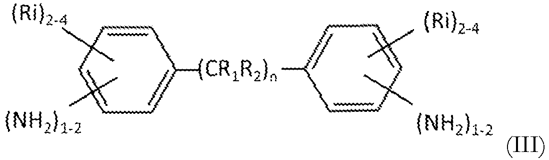 dans laquelle
n représente un entier allant de 0 à 4, de préférence de 1 à 3,
R1 et R2, identiques ou différents, sont choisis dans le groupe constitué par un atome d'hydrogène et un groupe méthyle, éthyle, isobutyle ou benzyle, de préférence R1 et R2 représentent tous les deux un atome d'hydrogène.

De préférence, selon ce mode de réalisation, le durcisseur aminé répond à la formule (IV) : 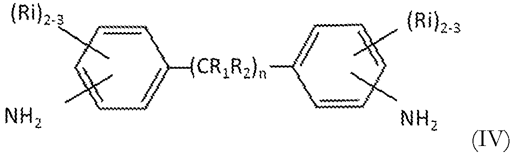 dans laquelle
n représente 1 ou 2, de préférence 1,
R1 et R2, identiques ou différents, sont choisis dans le groupe constitué par un atome d'hydrogène, un groupe méthyle, éthyle, isobutyle ou benzyle, de préférence R1 et R2 représentent tous les deux un atome d'hydrogène.

De préférence encore, selon ce mode de réalisation, le durcisseur aminé répond à la formule (V) :

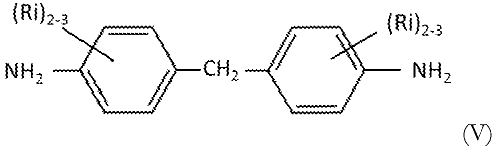

Très préférentiellement, selon l'invention, le durcisseur aminé est choisi dans le groupe constitué par les composés ci-dessous et les mélanges de ces composés :

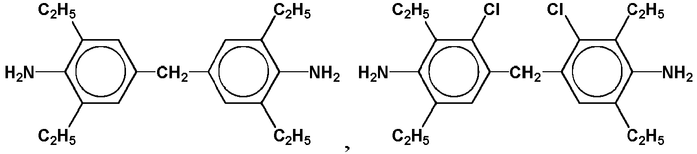

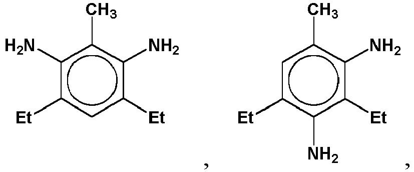

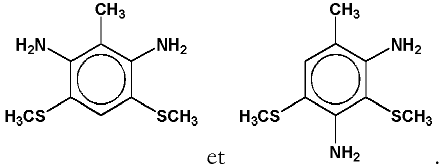

A titre d'exemple de durcisseurs aminés disponibles dans le commerce et utilisables dans le cadre de la présente invention, on peut citer par exemple l'« Ethacure 100 » ou l'« Ethacure 300 » de la société Albemarle, le « Lonzacure DETDA », le « Lonzacure MDEA » ou le « Lonzacure MCDEA » de la société Lonza.

La quantité de durcisseur aminé est comprise entre 1 et 15 pce. En dessous du minimum indiqué, l'effet technique visé s'est révélé insuffisant, alors qu'au-delà du maximum indiqué, on s'expose à des risques de pénalisation de la mise en œuvre à l'état cru des compositions. Préférentiellement, le taux de durcisseur aminé est compris dans un domaine allant de 5 à 10 pce, de préférence de 2 à 8 pce.

### Imidazole

La composition selon l'invention comprend un imidazole de formule générale (A) 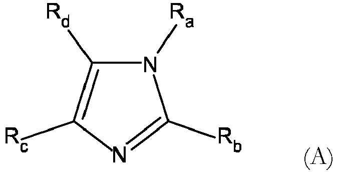 dans laquelle,
- Rₐ représente un atome d'hydrogène ou un groupe hydrocarboné, éventuellement interrompu par un ou plusieurs hétéroatomes et/ou substitué,
- R_{b} représente un groupe hydrocarboné,
- R_{c} et R_{d} représentent indépendamment l'un de l'autre, un atome d'hydrogène ou un groupe hydrocarboné, éventuellement interrompu par un ou plusieurs hétéroatomes et/ou substitué,
- ou encore R_{c} et R_{d} forment ensemble avec les atomes de carbone du cycle imidazole auxquels ils se rattachent, un cycle éventuellement interrompu par un ou plusieurs hétéroatomes et/ou substitué.

Par l'expression « éventuellement interrompu par un ou plusieurs hétéroatomes et/ou substitué », on entend que les groupes Rₐ, R_{c} et R_{d} peuvent, indépendamment et lorsqu'ils représentent un groupe hydrocarboné, être interrompus par un hétéroatome (c'est-à-dire en d'autres termes qu'un hétéroatome est intercalé dans la chaine hydrocarbonée), préférentiellement choisi parmi l'azote, l'oxygène et le soufre, et/ou substitués par un groupe fonctionnel. Par groupe fonctionnel, on entend un groupe comprenant un hétéroatome, préférentiellement choisi parmi les groupes amino, alkylamine, alcoxyle et hydroxyle, préférentiellement choisi parmi les groupes hydroxyle et amino.

Par groupe amino, on entend un groupe de formule -NH₂. Par groupe hydroxyle on entend un groupe de formule -OH.

De préférence, l'imidazole de formule générale (A) possède des groupes tels que :
- Rₐ est choisi dans le groupe constitué par un atome d'hydrogène, les groupes alkyles ayant de 1 à 20 atomes de carbone, cycloalkyles ayant de 5 à 24 atomes de carbone, aryles ayant de 6 à 30 atomes de carbone, aralkyles ayant de 7 à 25 atomes de carbone, éventuellement substitués,
- R_{b} est choisi dans le groupe constitué par les groupes alkyles ayant de 1 à 20 atomes de carbone, cycloalkyles ayant de 5 à 24 atomes de carbone, aryles ayant de 6 à 30 atomes de carbone ou aralkyles ayant de 7 à 25 atomes de carbone,
- R_{c} et R_{d} sont indépendamment choisis dans le groupe constitué par un atome d'hydrogène, les groupes alkyles ayant de 1 à 20 atomes de carbone, cycloalkyles ayant de 5 à 24 atomes de carbone, aryles ayant de 6 à 30 atomes de carbone ou aralkyles ayant de 7 à 25 atomes de carbone; éventuellement substitués, ou encore R_{c} et R_{d} forment ensemble avec les atomes de carbone du cycle imidazole auxquels ils se rattachent, un cycle choisi parmi les cycles aromatiques, hétéroaromatiques ou aliphatiques, comprenant de 5 à 12 atomes de carbone, de préférence 5 ou 6 atomes de carbone.

Préférentiellement, Rₐ est choisi dans le groupe constitué par les groupes alkyles ayant de 2 à 12 atomes de carbone et aralkyles ayant de 7 à 13 atomes de carbone, éventuellement substitués. Plus préférentiellement, Rₐ est choisi dans le groupe constitué par les groupes aralkyles ayant de 7 à 13 atomes de carbone, éventuellement substitués et R_{b} est choisi dans le groupe constitué par les groupes alkyles ayant de 1 à 12 atomes de carbone. Encore plus préférentiellement, Rₐ est choisi dans le groupe constitué par les groupes aralkyle ayant de 7 à 11 atomes de carbone éventuellement substitués et R_{b} est choisi dans le groupe constitué par les groupes alkyles ayant de 1 à 4 atomes de carbone.

De préférence, R_{c} et R_{d} sont indépendamment choisis dans le groupe constitué par un atome d'hydrogène et les groupes alkyles ayant de 1 à 12 atomes de carbone, cycloalkyles ayant de 5 à 8 atomes de carbone, aryles ayant de 6 à 24 atomes de carbone et aralkyles ayant de 7 à 13 atomes de carbone. Alternativement et préférentiellement également, R_{c} et R_{d} forment avec les atomes de carbone du cycle imidazole auxquels ils se rattachent, un cycle phényle, cyclohexene, ou cyclopentene.

De manière très préférée, R_{c} et R_{d} représentent l'atome d'hydrogène, Rₐ et R_{b} étant choisis tels que décrit précédemment.

Dans un arrangement préféré, Rₐ est un groupe naphthylalkyle comprenant de 11 à 13 atomes de carbone, éventuellement substitué par au moins un groupe hydroxyle, R_{b} est un groupe alkyles ayant de 1 à 4 atomes de carbone, R_{c} et R_{d} sont indépendamment choisis dans le groupe constitué par un atome d'hydrogène et les groupes alkyles ayant de 1 à 12 atomes de carbone. Par groupe naphthylakyle, on entend un groupe de formule générale (A1), où n représente un entier compris entre 1 et 3 :

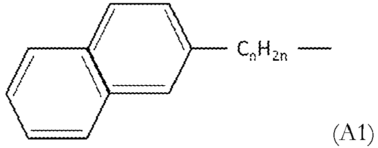

Préférentiellement, Rₐ est un groupe naphthylalkyle comprenant de 11 à 13 atomes de carbone substitué par au moins un groupe hydroxyle, R_{b} est un groupe alkyles ayant de 1 à 3 atomes de carbone, R_{c} et R_{d} sont un atome d'hydrogène. De manière très préférée, Rₐ est un groupe 2-naphthol-1-méthyle, R_{b} est un groupe méthyle, R_{c} et R_{d} sont l'atome d'hydrogène, le composé (A) répondant alors à la formule (A2) :

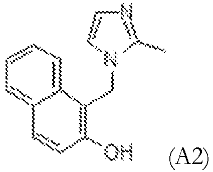

La composition de caoutchouc selon l'invention comprend préférentiellement de 0,1 à 5 pce d'imidazole de formule générale (A), préférentiellement de 0,1 à 3 pce, très préférentiellement de 0,2 à 3 pce et de manière très préférée de 0,2 à 2 pce d'imidazole de formule générale (A). En dessous de ces teneurs, l'effet technique n'est pas significatif tandis qu'au-delà de ces teneurs l'imidazole de formule générale (A) pourrait entrer en compétition avec le durcisseur aminé et modifier le réseau obtenu lors de la réticulation.

Les imidazoles utiles pour les besoin de l'invention sont soit disponibles dans le commerce, soit facilement préparés par l'homme de l'art selon des techniques bien connues telles que décrites par exemple dans les documents JP2012211122, JP2007269658 ou encore dans Science of Synthesis 2002, 12, 325-528.

Par exemple, à titre d'imidazoles disponibles dans le commerce et utiles aux besoins de l'invention, on peut citer le 1,2-diméthylimidazole, le 1-décyl-2-méthylimidazole, le 1-benzyl-2-méthylimidazole ou le 1-((2-Methyl-1H-Imidazol-1-yl)Methyl)Naphthalen-2-ol disponible dans le commerce sous la dénomination « Aradur 3123» de la société Hunstman.

### Charge renforçante

La composition du pneumatique selon l'invention comprend préférentiellement une charge renforçante.

La charge renforçante peut comprendre tout type de charge renforçante connue pour ses capacités à renforcer une composition de caoutchouc utilisable pour la fabrication de pneumatiques, par exemple une charge organique telle que du noir de carbone, une charge inorganique renforçante telle que de la silice, ou un mélange de de noir de carbone et de charge inorganique renforçante. Plus préférentiellement, la charge renforçante comprend majoritairement, voire exclusivement, du noir de carbone, en particulier dans le cas où la composition est utilisée dans une couche interne. La charge renforçante peut également comprendre majoritairement une charge inorganique renforçante, en particulier dans le cas où la composition est utilisée dans une bande de roulement.

Une telle charge renforçante consiste typiquement en des particules dont la taille moyenne (en masse) est inférieure au micromètre, généralement inférieure à 500 nm, le plus souvent comprise entre 20 et 200 nm, en particulier et plus préférentiellement comprise entre 20 et 150 nm.

Comme noirs de carbone conviennent tous les noirs de carbone, notamment les noirs du type HAF, ISAF, SAF conventionnellement utilisés dans les pneumatiques (noirs dits de grade pneumatique). Parmi ces derniers, on citera plus particulièrement les noirs de carbone renforçant des séries 100, 200 ou 300 (grades ASTM), comme par exemple les noirs N115, N134, N234, N326, N330, N339, N347, N375, ou encore, selon les applications visées, les noirs de séries plus élevées (par exemple N660, N683, N772). Les noirs de carbone pourraient être par exemple déjà incorporés à un élastomère isoprénique sous la forme d'un masterbatch (voir par exemple demandes WO 97/36724 ou WO 99/16600). La surface spécifique BET des noirs de carbone est mesurée selon la norme D6556-10 [méthode multipoints (au minimum 5 points) - gaz : azote - domaine de pression relative P/P0 : 0,1 à 0,3].

Par "charge inorganique renforçante", doit être entendu dans la présente demande, par définition, toute charge inorganique ou minérale (quelle que soit sa couleur et son origine naturelle ou de synthèse), encore appelée charge "blanche", charge "claire" voire "charge non noire" ("non-black filler") par opposition au noir de carbone, capable de renforcer à elle seule, sans autre moyen qu'un agent de couplage intermédiaire, une composition de caoutchouc destinée à la fabrication de pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyle (-OH) à sa surface.

Comme charges inorganiques renforçantes conviennent notamment des charges minérales du type siliceuse, en particulier de la silice (SiO₂), ou du type alumineuse, en particulier de l'alumine (Al₂O₃). La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g. A titres de silices précipitées hautement dispersibles (dites "HDS"), on citera par exemple les silices Ultrasil 7000 et Ultrasil 7005 de la société Degussa, les silices Zeosil 1165MP, 1135MP et 1115MP de la société Rhodia, la silice Hi-Sil EZ150G de la société PPG, les silices Zeopol 8715, 8745 et 8755 de la Société Huber, les silices à haute surface spécifique telles que décrites dans la demande WO 03/16837.

La surface spécifique BET de la silice est déterminée de manière connue par adsorption de gaz à l'aide de la méthode de Brunauer-Emmett-Teller décrite dans "The Journal of the American Chemical Society" Vol. 60, page 309, février 1938, plus précisément selon la norme française NF ISO 9277 de décembre 1996 (méthode volumétrique multipoints (5 points) - gaz: azote - dégazage: 1heure à 160°C - domaine de pression relative p/po : 0.05 à 0.17). La surface spécifique CTAB de la silice est déterminée selon la norme française NF T 45-007 de novembre 1987 (méthode B).

Conviennent également comme charges inorganiques renforçantes les charges minérales du type alumineuse, en particulier de l'alumine (Al₂O₃) ou des (oxyde)hydroxydes d'aluminium, ou encore des oxydes de titane renforçants, par exemple décrits dans US 6,610,261 et US 6,747,087.

L'état physique sous lequel se présente la charge inorganique renforçante est indifférent, que ce soit sous forme de poudre, de microperles, de granulés, de billes ou toute autre forme densifiée appropriée. Bien entendu on entend également par charge inorganique renforçante des mélanges de différentes charges inorganiques renforçantes, en particulier de charges siliceuses et/ou alumineuses hautement dispersibles.

L'homme du métier comprendra qu'à titre de charge équivalente de la charge inorganique renforçante décrite dans le présent paragraphe, pourrait être utilisée une charge renforçante d'une autre nature, notamment organique, dès lors que cette charge renforçante serait recouverte d'une couche inorganique telle que silice, ou bien comporterait à sa surface des sites fonctionnels, notamment hydroxyles, permettant d'établir la liaison entre la charge et l'élastomère en présence ou non d'un agent de recouvrement ou de couplage.

Pour coupler la charge inorganique renforçante à l'élastomère diénique, on peut utiliser de manière bien connue un agent de couplage (ou agent de liaison) au moins bifonctionnel destiné à assurer une connexion suffisante, de nature chimique et/ou physique, entre la charge inorganique (surface de ses particules) et l'élastomère diénique. On utilise en particulier des organosilanes ou des polyorganosiloxanes au moins bifonctionnels. Par « bifonctionnel », on entend un composé possédant un premier groupe fonctionnel capable d'interagir avec la charge inorganique et un second groupe fonctionnel capable d'interagir avec l'élastomère diénique. Par exemple, un tel composé bifonctionnel peut comprendre un premier groupe fonctionnel comprenant un atome de silicium, le dit premier groupe fonctionnel étant apte à interagir avec les groupes hydroxyles d'une charge inorganique et un second groupe fonctionnel comprenant un atome de soufre, le dit second groupe fonctionnel étant apte à interagir avec l'élastomère diénique.

Préférentiellement, les organosilanes sont choisis dans le groupe constitué par les organosilanes polysulfurés (symétriques ou asymétriques) tels que le tétrasulfure de bis(3-triéthoxysilylpropyl), en abrégé TESPT commercialisé sous la dénomination « Si69 » par la société Evonik ou le disulfure de bis-(triéthoxysilylpropyle), en abrégé TESPD commercialisé sous la dénomination « Si75 » par la société Evonik, les polyorganosiloxanes, les mercaptosilanes, les mercaptosilanes bloqués, tels que l'octanethioate de S-(3-(triéthoxysilyl)propyle)commercialisé par la société Momentive sous la dénomination « NXT Silane ». Plus préférentiellement, l'organosilane est un organosilane polysulfuré.

La teneur en agent de couplage est préférentiellement inférieure à 12 pce, étant entendu qu'il est en général souhaitable d'en utiliser le moins possible. Typiquement lorsque qu'une charge inorganique renforçante est présente, le taux d'agent de couplage représente de 0,5% à 15% en poids par rapport à la quantité de charge inorganique. Son taux est préférentiellement compris dans un domaine allant de 0,5 à 12 pce, plus préférentiellement compris dans un domaine allant de 4 à 8 pce. Ce taux est aisément ajusté par l'homme du métier selon le taux de charge inorganique utilisé dans la composition.

Selon l'invention, lorsque la charge renforçante est présente, le taux de charge renforçante, de préférence la charge renforçante comprenant majoritairement, voire exclusivement du noir de carbone, peut être compris dans un domaine allant de 20 à 200 pce, de préférence de 30 à 150 pce, de préférence de 40 à 100 pce, de préférence de 50 à 80 pce.

### Système de réticulation

Le système de réticulation peut être tout type de système connu de l'homme de l'art dans le domaine des compositions de caoutchouc pour pneumatique. Il peut notamment être à base de soufre, et/ou de peroxyde et/ou de bismaléimides.

De manière préférentielle, le système de réticulation est à base de soufre, on parle alors d'un système de vulcanisation. Le soufre peut être apporté sous toute forme, notamment sous forme de soufre moléculaire, ou d'un agent donneur de soufre. Au moins un accélérateur de vulcanisation est également préférentiellement présent, et, de manière optionnelle, préférentielle également, on peut utiliser divers activateurs de vulcanisation connus tels qu'oxyde de zinc, acide stéarique ou composé équivalent tels que les sels d'acide stéarique et sels de métaux de transition, dérivés guanidiques (en particulier diphénylguanidine), ou encore des retardateurs de vulcanisation connus.

Le soufre est utilisé à un taux préférentiel compris entre 0,5 et 12 pce, en particulier entre 1 et 10 pce. L'accélérateur de vulcanisation est utilisé à un taux préférentiel compris entre 0,5 et 10 pce, plus préférentiellement compris entre 0,5 et 8,0 pce.

On peut utiliser comme accélérateur tout composé susceptible d'agir comme accélérateur de vulcanisation des élastomères diéniques en présence de soufre, notamment des accélérateurs du type thiazoles ainsi que leurs dérivés, des accélérateurs de types sulfénamides, thiurames, dithiocarbamates, dithiophosphates, thiourées et xanthates. A titre d'exemples de tels accélérateurs, on peut citer notamment les composés suivants : disulfure de 2-mercaptobenzothiazyle (en abrégé "MBTS"), N-cyclohexyl-2-benzothiazyle sulfénamide ("CBS"), N,N-dicyclohexyl-2-benzothiazyle sulfénamide ("DCBS"), N-ter-butyl-2-benzothiazyle sulfénamide ("TBBS"), N-ter-butyl-2-benzothiazyle sulfénimide ("TBSI"), disulfure de tetrabenzylthiurame ("TBZTD"), dibenzyldithiocarbamate de zinc ("ZBEC") et les mélanges de ces composés.

### Additifs divers

Les compositions de caoutchouc conformes à l'invention peuvent comporter également tout ou partie des additifs et agents de mise en œuvre usuels, connus de l'homme de l'art et habituellement utilisés dans les compositions de caoutchouc pour pneumatiques, comme par exemple des plastifiants (tels que des huiles plastifiantes et/ou des résines plastifiantes), des pigments, des agents de protection tels que cires anti-ozone, anti-ozonants chimiques, anti-oxydants, des agents anti-fatigue.

La composition peut être soit à l'état cru (avant réticulation ou vulcanisation), soit à l'état cuit (après réticulation ou vulcanisation).

### Article de caoutchouc fini ou semi-fini et pneumatique

La présente invention a également pour objet un article de caoutchouc fini ou semi-fini comprenant une composition selon l'invention.

La présente invention a également pour objet un pneumatique qui comprend une composition selon l'invention.

Il est possible de définir au sein du pneumatique trois types de zones :
- La zone radialement extérieure et en contact avec l'air ambiant, comprenant les couches dites couches externes, ces couches comprenant essentiellement la bande de roulement et le flanc externe du pneumatique. Un flanc externe est une couche élastomérique disposée à l'extérieur de l'armature de carcasse par rapport à la cavité interne du pneumatique, entre le sommet et le bourrelet de sorte à couvrir totalement ou partiellement la zone de l'armature de carcasse s'étendant du sommet au bourrelet.
- La zone radialement intérieure et en contact avec le gaz de gonflage, cette zone étant généralement constituée par la couche étanche aux gaz de gonflage, parfois appelée couche étanche intérieure ou gomme intérieure (« inner liner » en anglais).
- La zone interne du pneumatique, c'est-à-dire celle comprise entre les zones extérieure et intérieure. Cette zone inclut des couches ou nappes qui sont appelées ici couches internes du pneumatique. Ce sont par exemple des nappes carcasses, des sous-couches de bande de roulement, des nappes de ceintures de pneumatiques ou tout autre couche qui n'est pas en contact avec l'air ambiant ou le gaz de gonflage du pneumatique.

La composition définie dans la présente description est particulièrement bien adaptée aux couches internes et externes des pneumatiques, et en particulier, pour les couches externes, aux compositions de bande de roulement.

Selon l'invention, la couche interne peut être choisie dans le groupe constitué par les nappes carcasse, les nappes sommet, les bourrages-tringle, les pieds sommets, les couches de découplage, les gommes de bordure, les gommes de bourrage, la sous-couche de bande de roulement et les combinaisons de ces couches internes. De préférence, la couche interne est choisie dans le groupe constitué par les nappes carcasses, les nappes sommet, les bourrages-tringle, les pieds sommets, les couches de découplage et les combinaisons de ces couches internes.

L'invention concerne particulièrement des pneumatiques destinés à équiper des véhicules à moteur de type tourisme, SUV ("Sport Utility Vehicles"), ou deux roues (notamment motos), ou avions, ou encore des véhicules industriels choisis parmi camionnettes, « Poids-lourd » - c'est-à-dire métro, bus, engins de transport routier (camions, tracteurs, remorques), véhicules hors-la-route tels qu'engins agricoles ou de génie civil -, et autres.

L'invention concerne les articles comprenant une composition de caoutchouc selon l'invention, tant à l'état cru (c'est à dire, avant cuisson) qu'à l'état cuit (c'est à dire, après réticulation ou vulcanisation).

### Préparation des compositions de caoutchouc

La composition de caoutchouc conforme à l'invention peut être fabriquée dans des mélangeurs appropriés, en utilisant deux phases de préparation successives bien connues de l'homme du métier :
- une première phase de travail ou malaxage thermomécanique (phase dite « non-productive »), qui peut être conduite en une seule étape thermomécanique au cours de laquelle on introduit, dans un mélangeur approprié tel qu'un mélangeur interne usuel (par exemple de type 'Banbury'), tous les constituants nécessaires, notamment la matrice élastomérique, les charges, les éventuels autres additifs divers, à l'exception du système de réticulation. L'incorporation de la charge à l'élastomère peut être réalisée en une ou plusieurs fois en malaxant thermomécaniquement. Dans le cas où la charge est déjà incorporée en totalité ou en partie à l'élastomère sous la forme d'un mélange-maître (« masterbatch » en anglais) comme cela est décrit par exemple dans les demandes WO 97/36724 ou WO 99/16600, c'est le mélange-maître qui est directement malaxé et le cas échéant on incorpore les autres élastomères ou charges présents dans la composition qui ne sont pas sous la forme de mélange-maître, ainsi que les éventuels autres additifs divers autres que le système de réticulation.

La phase non-productive est réalisée à haute température, jusqu'à une température maximale comprise entre 110°C et 190°C, de préférence entre 130°C et 180°C, pendant une durée généralement comprise entre 2 et 10 minutes.
- une seconde phase de travail mécanique (phase dite « productive »), qui est réalisée dans un mélangeur externe tel qu'un mélangeur à cylindres, après refroidissement du mélange obtenu au cours de la première phase non-productive jusqu'à une plus basse température, typiquement inférieure à 110°C, par exemple entre 40°C et 100°C. On incorpore alors le système de réticulation, et le tout est alors mélangé pendant quelques minutes, par exemple entre 2 et 15 min.

Le procédé pour préparer de telles compositions comporte par exemple les étapes suivantes :
a) incorporer à un élastomère diénique, au cours d'une première étape (dite "non-productive"), une charge renforçante, en malaxant thermomécaniquement le tout (par exemple en une ou plusieurs fois), jusqu'à atteindre une température maximale comprise entre 110°C et 190°C ;
b) refroidir l'ensemble à une température inférieure à 100°C ;
c) incorporer ensuite, au cours d'une seconde étape (dite "productive"), un système de réticulation ;
d) malaxer le tout jusqu'à une température maximale inférieure à 110°C.

Entre 1 et 30 pce de la résine époxyde, entre 1 et 15 pce d'un durcisseur aminé et un imidazole de formule générale (A) peuvent être introduits, indépendamment les uns des autres, soit durant la phase non-productive (a), soit durant la phase productive (c). De préférence, la résine époxyde est introduite lors de la phase non productive (a) tandis que le durcisseur aminé et l'imidazole de formule générale (A) sont introduits lors de la phase productive (c).

La composition finale ainsi obtenue peut ensuite être calandrée, par exemple sous la forme d'une feuille, d'une plaque notamment pour une caractérisation au laboratoire, ou encore extrudée sous la forme d'un semi-fini (ou profilé) de caoutchouc utilisé pour la fabrication d'un pneumatique.

La réticulation de la composition peut être conduite de manière connue de l'homme du métier, par exemple à une température comprise entre 130°C et 200°C, sous pression.

En plus des objets précédemment décrits, l'invention concerne au moins l'un des objets décrits aux points suivants :
**1.** Une composition de caoutchouc à base d'au moins :
   - un élastomère diénique,
   - une charge renforçante,
   - un système de réticulation,
   - de 1 à 30 parties en poids pour cent parties en poids d'élastomère, pce, de résine époxyde,
   - entre 1 et 15 pce d'un durcisseur aminé comprenant au moins deux fonctions amines primaires, situées sur au moins un cycle aromatique à six atomes, ledit au moins un cycle aromatique à six atomes comprenant :
      - au moins une fonction amine primaire, et
      - au moins deux radicaux Ri, identiques ou différents, choisis dans le groupe constitué par les radicaux alkyles linéaires ou ramifiés en C1-C6, les halogènes, les éthers, les amines tertiaires, les thio-éthers, les cétones, les esters et les amides, substitués par des radicaux alkyles linéaires ou ramifiés en C1-C6,
      de telle sorte que l'au moins un cycle aromatique à six atomes ne comprenne pas d'atome d'hydrogène situé en position ortho par rapport aux fonctions amines primaires,
   - un imidazole de formule générale (A) 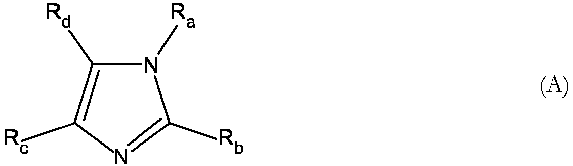 dans laquelle,
      - Rₐ représente un atome d'hydrogène ou un groupe hydrocarboné, éventuellement interrompu par un ou plusieurs hétéroatomes et/ou substitué,
      - R_{b} représente un groupe hydrocarboné,
      - R_{c} et R_{d} représentent indépendamment l'un de l'autre, un atome d'hydrogène ou un groupe hydrocarboné, éventuellement interrompu par un ou plusieurs hétéroatomes et/ou substitué,
      - ou encore R_{c} et R_{d} forment ensemble avec les atomes de carbone du cycle imidazole auxquels ils se rattachent, un cycle éventuellement interrompu par un ou plusieurs hétéroatomes et/ou substitué.
**2.** Une composition de caoutchouc selon le point précédent dans laquelle l'élastomère diénique est choisi dans le groupe constitué par les polybutadiènes, le caoutchouc naturel, les polyisoprènes de synthèse, les copolymères de butadiène, les copolymères d'isoprène, et les mélanges de ces élastomères.
**3.** Une composition de caoutchouc selon le point 1 dans laquelle l'élastomère diénique est un élastomère isoprénique.
**4.** Une composition de caoutchouc selon l'un quelconque des points précédents, dans laquelle la résine époxyde est choisie parmi les résines époxydes aromatiques, époxydes alicycliques et époxydes aliphatiques.
**5.** Une composition de caoutchouc selon le point précédent dans laquelle les résines époxydes aromatiques sont choisies dans le groupe constitué par le 2,2 bis[4-(glycidyloxy) phényl] propane, le poly[(o-crésylglycidyl éther)-co-formaldéhyde], le poly[(phénylglycidyl éther)-co-formaldéhyde], le poly[(phenylglycidyl éther)-co(hydroxybenzaldehyde glycidyl éther)], les résines époxydes amines aromatiques et le mélanges de ces composés.
**6.** Une composition de caoutchouc selon l'un quelconque des points précédents, dans laquelle le taux de résine époxyde est compris entre 10 et 25 pce, de préférence entre 10 et 20 pce.
**7.** Une composition de caoutchouc selon l'un quelconque des points précédents, dans laquelle l'au moins un cycle aromatique à 6 atomes du durcisseur aminé comprend au moins deux radicaux Ri, identiques ou différents, choisis dans le groupe constitué par les radicaux alkyles linéaires ou ramifiés en C1-C6, les halogènes, et les éthers, les amines tertiaires et les thio-éthers, substitués par des radicaux alkyles linéaires ou ramifiés en C1-C6.
**8.** Une composition de caoutchouc selon l'un quelconque des points précédents, dans laquelle l'au moins un cycle aromatique à 6 atomes du durcisseur aminé comprend au moins deux radicaux Ri, identiques ou différents, choisis dans le groupe constitué par les radicaux alkyles linéaires ou ramifiés en C1-C6.
**9.** Une composition de caoutchouc selon l'un quelconque des points 1 à 7, dans laquelle l'au moins un cycle aromatique à six atomes du durcisseur aminé comprend au moins deux radicaux Ri, identiques ou différents, choisis dans le groupe constitué par les halogènes, et les éthers, les amines tertiaires et les thio-éthers, substitués par des radicaux alkyles linéaires ou ramifiés en C1-C6, et au moins un radical Ri choisi dans le groupe constitué par les radicaux alkyles linéaires ou ramifiés en C1-C6.
**10.** Une composition de caoutchouc selon l'un quelconque des points précédents, dans laquelle les radicaux alkyles linéaires ou ramifiés en C1-C6 sont choisis dans le groupe constitué par les radicaux méthyle, éthyle, propyle, isopropyle, isobutyle et butyle, de préférence dans le groupe constitué par les radicaux méthyle, éthyle et propyle.
**11.** Une composition de caoutchouc selon l'un quelconque des points précédents, dans laquelle l'au moins un cycle aromatique à six atomes est un cycle aromatique à six atomes de carbone.
**12.** Une composition de caoutchouc selon l'un quelconque des points 1 à 6, dans laquelle le durcisseur aminé répond à la formule (I) : 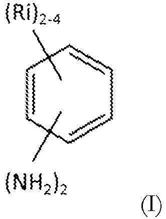
**13.** Une composition selon le point précédent, dans laquelle le durcisseur aminé répond à la formule (II) : 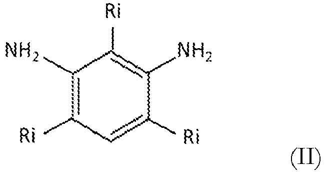
**14.** Une composition de caoutchouc selon l'un quelconque des points 1 à 11, dans laquelle le durcisseur aminé répond à la formule (III) : 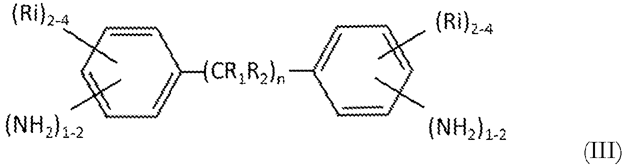 dans laquelle
   n représente un entier allant de 0 à 4, de préférence de 1 à 3,
   R1 et R2, identiques ou différents, sont choisis dans le groupe constitué par un atome d'hydrogène et un groupe méthyle, éthyle, isobutyle ou benzyle, de préférence R1 et R2 représentent tous les deux un atome d'hydrogène.
**15.** Une composition de caoutchouc selon le point précédent, dans laquelle le durcisseur aminé répond à la formule (IV) : 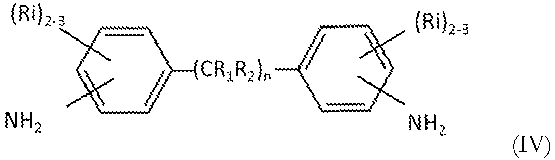 dans laquelle
   n représente 1 ou 2, de préférence 1,
   R1 et R2, identiques ou différents, sont choisis dans le groupe constitué par un atome d'hydrogène, un groupe méthyle, éthyle, isobutyle ou benzyle, de préférence R1 et R2 représentent tous les deux un atome d'hydrogène.
**16.** Une composition de caoutchouc selon l'un quelconque des points 14 ou 15, dans laquelle le durcisseur aminé répond à la formule (V) : 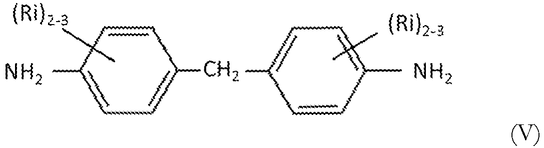
**17.** Une composition de caoutchouc selon l'un quelconque des points 1 à 11, dans laquelle le durcisseur aminé est choisi dans le groupe constitué par les composés ci-dessous et les mélanges de ces composés : 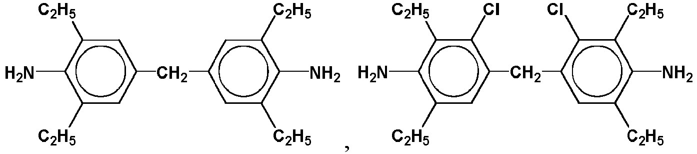 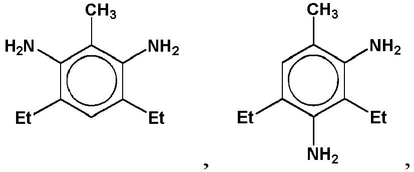 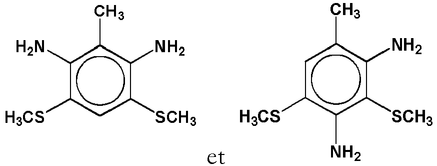
**18.** Une composition de caoutchouc selon l'un quelconque des points précédents, dans laquelle le taux de durcisseur aminé est compris dans un domaine allant de 5 à 10 pce, de préférence de 2 à 8 pce.
**19.** Une composition de caoutchouc selon l'un quelconque des points précédents, dans laquelle, dans l'imidazole de formule générale (A) :
   - Rₐ est choisi dans le groupe constitué par un atome d'hydrogène, les groupes alkyles ayant de 1 à 20 atomes de carbone, cycloalkyles ayant de 5 à 24 atomes de carbone, aryles ayant de 6 à 30 atomes de carbone, aralkyles ayant de 7 à 25 atomes de carbone, éventuellement substitués,
   - R_{b} est choisi dans le groupe constitué par les groupes alkyles ayant de 1 à 20 atomes de carbone, cycloalkyles ayant de 5 à 24 atomes de carbone, aryles ayant de 6 à 30 atomes de carbone ou aralkyles ayant de 7 à 25 atomes de carbone,
   - R_{c} et R_{d} sont indépendamment choisis dans le groupe constitué par un atome d'hydrogène, les groupes alkyles ayant de 1 à 20 atomes de carbone, cycloalkyles ayant de 5 à 24 atomes de carbone, aryles ayant de 6 à 30 atomes de carbone ou aralkyles ayant de 7 à 25 atomes de carbone, éventuellement substitués, ou encore R_{c} et R_{d} forment ensemble avec les atomes de carbone du cycle imidazole auxquels ils se rattachent, un cycle choisi parmi les cycles aromatiques, hétéroaromatiques ou aliphatiques, comprenant de 5 à 12 atomes de carbone, de préférence 5 ou 6 atomes de carbone.
**20.** Une composition de caoutchouc selon l'un quelconque des points précédents, dans laquelle, dans l'imidazole de formule générale (A), Rₐ est choisi dans le groupe constitué par les groupes alkyles ayant de 2 à 12 atomes de carbone et aralkyles ayant de 7 à 13 atomes de carbone, éventuellement substitués.
**21.** Une composition de caoutchouc selon l'un quelconque des points précédents, dans laquelle, dans l'imidazole de formule générale (A), Rₐ est choisi dans le groupe constitué par les groupes aralkyles ayant de 7 à 13 atomes de carbone éventuellement substitués et R_{b} est choisi dans le groupe constitué par les groupes alkyles ayant de 1 à 12 atomes de carbone.
**22.** Une composition de caoutchouc selon l'un quelconque des points précédents, dans laquelle, dans l'imidazole de formule générale (A), Rₐ est choisi dans le groupe constitué par les groupes aralkyle ayant de 7 à 11 atomes de carbone éventuellement substitués et R_{b} est choisi dans le groupe constitué par les groupes alkyles ayant de 1 à 4 atomes de carbone.
**23.** Une composition de caoutchouc selon l'un quelconque des points précédents, dans laquelle, dans l'imidazole de formule générale (A), R_{c} et R_{d} sont indépendamment choisis dans le groupe constitué par un atome d'hydrogène et les groupes alkyles ayant de 1 à 12 atomes de carbone, cycloalkyles ayant de 5 à 8 atomes de carbone, aryles ayant de 6 à 24 atomes de carbone et aralkyles ayant de 7 à 13 atomes de carbone, R_{c} et R_{d} étant très préférentiellement l'atome d'hydrogène.
**24.** Une composition de caoutchouc selon l'un quelconque des points 1 à 22, dans laquelle, dans l'imidazole de formule générale (A), R_{c} et R_{d} forment avec les atomes de carbone du cycle imidazole auxquels ils se rattachent, un cycle phényle, cyclohexene, ou cyclopentene.
**25.** Une composition de caoutchouc selon l'un quelconque des points 1 à 18, dans laquelle, dans l'imidazole de formule générale (A), Rₐ est un groupe naphthylalkyle comprenant de 11 à 13 atomes de carbone, éventuellement substitué par au moins un groupe hydroxyle, R_{b} est un groupe alkyles ayant de 1 à 4 atomes de carbone, R_{c} et R_{d} sont indépendamment choisis dans le groupe constitué par un atome d'hydrogène et les groupes alkyles ayant de 1 à 12 atomes de carbone.
**26.** Une composition de caoutchouc selon le point précédent dans laquelle Rₐ est un groupe naphthylalkyle comprenant de 11 à 13 atomes de carbone substitué par au moins un groupe hydroxyle, R_{b} est un groupe alkyles ayant de 1 à 3 atomes de carbone, R_{c} et R_{d} sont un atome d'hydrogène, et dans laquelle préférentiellement Rₐ est un groupe 2-naphtholméthyle, R_{b} est un groupe méthyle, R_{c} et R_{d} sont l'atome d'hydrogène, le composé (A) répondant alors à la formule (A2) : 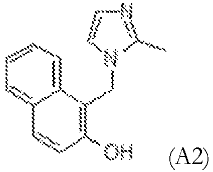
**27.** Une composition de caoutchouc selon l'un quelconque des points précédents, dans laquelle le taux d'imidazole de formule générale (A) est compris dans un domaine allant de 0,1 à 5 pce.
**28.** Une composition de caoutchouc selon l'un quelconque des points précédents, dans laquelle la charge renforçante comporte du noir de carbone, une charge inorganique renforçante ou un mélange de noir de carbone et de charge inorganique renforçante, de préférence dans laquelle la charge renforçante comporte majoritairement du noir de carbone.
**29.** Une composition de caoutchouc selon l'un quelconque des points précédents, dans laquelle le taux de charge renforçante est compris dans un domaine allant de 20 à 200 pce, de préférence de 30 à 150 pce.
**30.** Un article de caoutchouc fini ou semi-fini comprenant une composition de caoutchouc selon l'un quelconque des points précédents.
**31.** Un pneumatique comprenant une composition de caoutchouc selon l'un quelconque des points 1 à 27.
**32.** Un pneumatique selon le point 29, dans lequel la composition de caoutchouc selon l'un quelconque des points 1 à 27 est présente dans au moins une couche interne.
**33.** Un pneumatique selon le point 30, dans lequel la couche interne est choisie dans le groupe constitué par les nappes carcasse, les nappes sommet, les bourrages-tringle, les pieds sommets, les couches de découplage, les gommes de bordure, les gommes de bourrage, la sous-couche de bande de roulement et les combinaisons de ces couches internes.
**34.** Un pneumatique selon l'un quelconque des points 29 à 31, dans lequel la composition de caoutchouc selon l'un quelconque des points 1 à 27 est présente dans au moins une couche externe.

Les exemples suivants illustrent l'invention sans en limiter la portée.

### EXEMPLES

### Mesures utilisées

### • Essais de traction

Les essais ont été effectués conformément à la norme française NF T 46-002 de septembre 1988. Toutes les mesures de traction ont été effectuées dans les conditions normales de température (23±2°C) et d'hygrométrie (50±5% d'humidité relative), ainsi qu'à température plus élevée (100±2°C) dans les mêmes conditions d'hygrométrie, selon la norme française NF T 40-101 (décembre 1979). Les mesures à 23°C et à 100°C permettent d'évaluer l'évolution de la rigidité du matériau sur une plage couvrant le domaine de fonctionnement courant du pneumatique.

On a mesuré en seconde élongation (c'est-à-dire après accommodation) le module sécant nominal calculé en se ramenant à la section initiale de l'éprouvette (ou contrainte apparente, en MPa) à 10% d'allongement noté MA10, sur des échantillons cuits 60 minutes à 150°C.

Les résultats sont exprimés en base 100, la valeur 100 étant attribuée au témoin. Un résultat supérieur à 100, indique que la composition de l'exemple considéré présente une plus forte rigidité.

### • Préparation des compositions

On procède pour les essais qui suivent de la manière suivante : on introduit dans un mélangeur interne (taux de remplissage final : environ 70% en volume), dont la température initiale de cuve est d'environ 60 °C, successivement, l'élastomère diénique, la charge renforçante, entre 1 et 30 pce de la résine époxyde, ainsi que les divers autres ingrédients à l'exception du système de vulcanisation, du durcisseur aminé et de l'imidazole. On conduit alors un travail thermomécanique (phase non-productive) en une étape, qui dure au total environ 3 à 4 min, jusqu'à atteindre une température maximale de « tombée » de 165°C.

On récupère le mélange ainsi obtenu, on le refroidit puis on incorpore du soufre, un accélérateur type sulfénamide, le durcisseur aminé et l'imidazole sur un mélangeur (homo-finisseur) à 30 °C, en mélangeant le tout (phase productive) pendant un temps approprié (par exemple entre 5 et 12 min).

Les compositions ainsi obtenues sont ensuite calandrées soit sous la forme de plaques (épaisseur de 2 à 3 mm) ou de feuilles fines de caoutchouc pour la mesure de leurs propriétés physiques ou mécaniques, soit extrudées sous la forme d'un profilé.

La réticulation de la composition est conduite à une température de 150°C, pendant 60 min, sous pression.

### Exemple 1

Trois compositions de caoutchouc ont été préparées comme indiqué précédemment, deux non conformes à l'invention (C.1 et C.2) et une conforme (C.3). Leurs formulations (en pce) et leurs propriétés ont été résumées dans le tableau 1 ci-après.

Les compositions C.2 et C.3 contiennent une résine époxyde et un durcisseur polyaminé en remplacement du couple résine formo-phénolique / durcisseur(s) HMT contenu dans la composition témoin conventionnelle C.1.

A l'exception de la composition témoin C.1, les compositions présentées dans le tableau 1 n'engendrent pas la formation de formaldéhyde lors de la cuisson.

**Tableau 1**

| | **C.1** | **C.2** | **C.3** |
|---|---|---|---|
| NR (1) | 100 | 100 | 100 |
| Noir de carbone (2) | 75 | 75 | 75 |
| ZnO (3) | 8 | 8 | 8 |
| 6PPD (4) | 2 | 2 | 2 |
| Acide stéarique (5) | 0.8 | 0.8 | 0.8 |
| Soufre | 6 | 6 | 6 |
| CBS (6) | 1 | 1 | 1 |
| Résine formophénolique (7) | 12 | | |
| H3M (8) | 4 | | |
| HMT3H (9) | 2.8 | | |
| Résine époxyde (10) | | 16 | 16 |
| Durcisseur (11) | | 3.1 | 3.1 |
| Imidazole (12) | | | 1 |

| **Propriétés à Cuit** | | | |
|---|---|---|---|
| MAS10% 23°C (MPa) | 100 | 104 | 110 |
| MAS10% 100°C (MPa) | 100 | 84 | 99 |

(1) Caoutchouc Naturel
(2) Noir de carbone N326 (dénomination selon la norme ASTM D-1765)
(3) Oxyde de zinc (grade industriel - société Umicore)
(4) N-1,3-diméthylbutyl-N-phénylparaphénylènediamine (Santoflex 6-PPD de la société Flexsys)
(5) Stéarine (« Pristerene 4931» de la société Uniqema)
(6) N-cyclohexyl-benzothiazyl sulphénamide(Santocure CBS de la société Flexsys)
(7) Résine formophénolique novolac (« Peracit 4536K » de la société Perstorp)
(8) hexaméthoxyméthylmélamine
(9) Hexaméthylènetétramine (de la société Degussa)
(10) Résine époxyde crésol Novolac Poly[(o-cresyl glycidyl ether)-co-formaldehyde], ref.408042 de chez Sigma-Aldrich
(11) Durcisseur diamine aromatique « Ethacure 100 » de la société Albemarle (CAS 68479-98-1)
(12) Imidazole « Aradur 3123 » de la société Huntsman (CAS 185554-99-8)

On note que la composition conforme présente une rigidité à température ambiante similaire aux compositions C.1 et C.2, et présente une rigidité à haute température supérieure à la composition sans imidazole C.2, similaire à la composition C.1, en présentant l'avantage par rapport à cette dernière de ne pas former de formaldéhyde lors de la cuisson.

### Exemple 2

Dix compositions de caoutchouc ont été préparées comme indiqué précédemment. Leurs formulations (en pce) et leurs propriétés ont été résumées dans le tableau 2 ci-après.

**Tableau 2**

| | **C.4** | **C.5** | **C.6** | **C.7** | **C.8** | **C.9** | **C.10** | **C.11** | **C.12** | **C.13** |
|---|---|---|---|---|---|---|---|---|---|---|
| NR (1) | 100 | 100 | 100 | 100 | 100 | 100 | 100 | 100 | 100 | 100 |
| Noir de carbone (2) | 60 | 60 | 60 | 60 | 60 | 60 | 60 | 60 | 60 | 60 |
| ZnO (3) | 8 | 8 | 8 | 8 | 8 | 8 | 8 | 8 | 8 | 8 |
| 6PPD (4) | 2 | 2 | 2 | 2 | 2 | 2 | 2 | 2 | 2 | 2 |
| Acide stéarique (5) | 0.6 | 0.6 | 0.6 | 0.6 | 0.6 | 0.6 | 0.6 | 0.6 | 0.6 | 0.6 |
| Soufre | 6 | 6 | 6 | 6 | 6 | 6 | 6 | 6 | 6 | 6 |
| CBS (6) | 1 | 1 | 1 | 1 | 1 | 1 | 1 | 1 | 1 | 1 |
| Résine époxyde (7) | 16 | 16 | 16 | 12 | 12 | 16 | 16 | 12 | 12 | 16 |
| Durcisseur (8) | 1.9 | 3.6 | 1.9 | 1.4 | 1.4 | | | | | |
| durcisseur (9) | | | | | | 3.6 | 3.6 | 2.7 | 2.7 | |
| Imidazole (10) | | | 0.5 | | 0.5 | | 0.5 | | 0.5 | 0.5 |

| **Propriétés à Cuit** | | | | | | | | | | |
|---|---|---|---|---|---|---|---|---|---|---|
| MAS10% 23°C (MPa) | 100 | 106 | 116 | 80 | 91 | 126 | 132 | 90 | 93 | 102 |
| MAS10% 100°C (MPa) | 100 | 101 | 131 | 85 | 123 | 173 | 202 | 133 | 146 | 108 |

(1) Caoutchouc Naturel
(2) Noir de carbone N347 (dénomination selon la norme ASTM D-1765)
(3) Oxyde de zinc (grade industriel - société Umicore)
(4) N-1,3-diméthylbutyl-N-phénylparaphénylènediamine (Santoflex 6-PPD de la société Flexsys)
(5) Stéarine (« Pristerene 4931 » de la société Uniqema)
(6) N-cyclohexyl-benzothiazyl sulphénamide(Santocure CBS de la société Flexsys)
(7) Résine époxyde crésol Novolac Poly[(o-cresyl glycidyl ether)-co-formaldehyde], ref.408042 de chez Sigma-Aldrich
(8) Durcisseur diamine aromatique « Ethacure 100 » de la société Albemarle (CAS 68479-98-1)
(9) Durcisseur diamine aromatique « Ethacure 300 » de la société Albemarle (CAS 106264-79-3)
(10) Imidazole « Aradur 3123 » de la société Huntsman (CAS 185554-99-8)

Ces essais illustrent que l'ajout d'un imidazole permet d'améliorer la rigidité à haute température. L'essai C.5 montre que la seule augmentation de la quantité de durcisseur permet d'augmenter la rigidité à faible température mais pas la rigidité à haute température. L'essai C.13 montre que l'imidazole utilisé sans durcisseur ne permet pas d'améliorer la rigidité à haute température. C'est donc bien l'association du durcisseur et de l'imidazole qui permet d'obtenir à la fois une rigidité satisfaisante à température ambiante et à haute température.

## Revendications

1. Composition de caoutchouc à base d'au moins :
- un élastomère diénique,
- une charge renforçante,
- un système de réticulation,
- de 1 à 30 parties en poids pour cent parties en poids d'élastomère, pce, de résine époxyde,
- entre 1 et 15 pce d'un durcisseur aminé comprenant au moins deux fonctions amines primaires, situées sur au moins un cycle aromatique à six atomes, ledit au moins un cycle aromatique à six atomes comprenant :
• au moins une fonction amine primaire, et
• au moins deux radicaux Ri, identiques ou différents, choisis dans le groupe constitué par les radicaux alkyles linéaires ou ramifiés en C1-C6, les halogènes, les éthers, les amines tertiaires, les thio-éthers, les cétones, les esters et les amides, substitués par des radicaux alkyles linéaires ou ramifiés en C1-C6,
de telle sorte que l'au moins un cycle aromatique à six atomes ne comprenne pas d'atome d'hydrogène situé en position ortho par rapport aux fonctions amines primaires,
- un imidazole de formule générale (A) 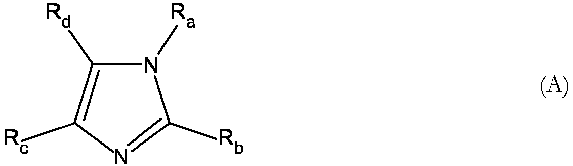 dans laquelle,
• Rₐ représente un atome d'hydrogène ou un groupe hydrocarboné, éventuellement interrompu par un ou plusieurs hétéroatomes et/ou substitué,
• R_{b} représente un groupe hydrocarboné,
• R_{c} et R_{d} représentent indépendamment l'un de l'autre, un atome d'hydrogène ou un groupe hydrocarboné, éventuellement interrompu par un ou plusieurs hétéroatomes et/ou substitué,
• ou encore R_{c} et R_{d} forment ensemble avec les atomes de carbone du cycle imidazole auxquels ils se rattachent, un cycle éventuellement interrompu par un ou plusieurs hétéroatomes et/ou substitué.

2. Composition de caoutchouc selon la revendication précédente dans laquelle l'élastomère diénique est choisi dans le groupe constitué par les polybutadiènes, le caoutchouc naturel, les polyisoprènes de synthèse, les copolymères de butadiène, les copolymères d'isoprène, et les mélanges de ces élastomères et est préférentiellement un élastomère isoprénique.

3. Composition de caoutchouc selon l'une quelconque des revendications précédentes, dans laquelle la résine époxyde est choisie parmi les résines époxydes aromatiques, époxydes alicycliques et époxydes aliphatiques.

4. Composition de caoutchouc selon l'une quelconque des revendications précédentes, dans laquelle le taux de résine époxyde est compris entre 10 et 25 pce, de préférence entre 10 et 20 pce.

5. Composition de caoutchouc selon l'une quelconque des revendications précédentes, dans laquelle l'au moins un cycle aromatique à 6 atomes du durcisseur aminé comprend au moins deux radicaux Ri, identiques ou différents, choisis dans le groupe constitué par les radicaux alkyles linéaires ou ramifiés en C1-C6, les halogènes, et les éthers, les amines tertiaires et les thio-éthers, substitués par des radicaux alkyles linéaires ou ramifiés en C1-C6.

6. Composition de caoutchouc selon l'une quelconque des revendications précédentes, dans laquelle l'au moins un cycle aromatique à 6 atomes du durcisseur aminé comprend au moins deux radicaux Ri, identiques ou différents, choisis dans le groupe constitué par les radicaux alkyles linéaires ou ramifiés en C1-C6.

7. Composition de caoutchouc selon l'une quelconque des revendications précédentes, dans laquelle le taux de durcisseur aminé est compris dans un domaine allant de 5 à 10 pce, de préférence de 2 à 8 pce.

8. Composition de caoutchouc selon l'une quelconque des revendications précédentes, dans laquelle, dans l'imidazole de formule générale (A) :
- Rₐ est choisi dans le groupe constitué par un atome d'hydrogène, les groupes alkyles ayant de 1 à 20 atomes de carbone, cycloalkyles ayant de 5 à 24 atomes de carbone, aryles ayant de 6 à 30 atomes de carbone, aralkyles ayant de 7 à 25 atomes de carbone, éventuellement substitués,
- R_{b} est choisi dans le groupe constitué par les groupes alkyles ayant de 1 à 20 atomes de carbone, cycloalkyles ayant de 5 à 24 atomes de carbone, aryles ayant de 6 à 30 atomes de carbone ou aralkyles ayant de 7 à 25 atomes de carbone,
- R_{c} et R_{d} sont indépendamment choisis dans le groupe constitué par un atome d'hydrogène, les groupes alkyles ayant de 1 à 20 atomes de carbone, cycloalkyles ayant de 5 à 24 atomes de carbone, aryles ayant de 6 à 30 atomes de carbone ou aralkyles ayant de 7 à 25 atomes de carbone, éventuellement substitués, ou encore R_{c} et R_{d} forment ensemble avec les atomes de carbone du cycle imidazole auxquels ils se rattachent, un cycle choisi parmi les cycles aromatiques, hétéroaromatiques ou aliphatiques, comprenant de 5 à 12 atomes de carbone, de préférence 5 ou 6 atomes de carbone.

9. Composition de caoutchouc selon l'une quelconque des revendications précédentes, dans laquelle, dans l'imidazole de formule générale (A), Rₐ est choisi dans le groupe constitué par les groupes alkyles ayant de 2 à 12 atomes de carbone et aralkyles ayant de 7 à 13 atomes de carbone, éventuellement substitués.

10. Composition de caoutchouc selon l'une quelconque des revendications précédentes, dans laquelle, dans l'imidazole de formule générale (A), Rₐ est choisi dans le groupe constitué par les groupes aralkyles ayant de 7 à 13 atomes de carbone éventuellement substitués et R_{b} est choisi dans le groupe constitué par les groupes alkyles ayant de 1 à 12 atomes de carbone.

11. Composition de caoutchouc selon l'une quelconque des revendications précédentes, dans laquelle, dans l'imidazole de formule générale (A), R_{c} et R_{d} sont indépendamment choisis dans le groupe constitué par un atome d'hydrogène et les groupes alkyles ayant de 1 à 12 atomes de carbone, cycloalkyles ayant de 5 à 8 atomes de carbone, aryles ayant de 6 à 24 atomes de carbone et aralkyles ayant de 7 à 13 atomes de carbone.

12. Composition de caoutchouc selon l'une quelconque des revendications précédentes, dans laquelle le taux d'imidazole de formule générale (A) est compris dans un domaine allant de 0,1 à 5 pce.

13. Composition de caoutchouc selon l'une quelconque des revendications précédentes, dans laquelle le taux de charge renforçante est compris dans un domaine allant de 20 à 200 pce, de préférence de 30 à 150 pce.

14. Article de caoutchouc fini ou semi-fini comprenant une composition de caoutchouc selon l'une quelconque des revendications précédentes.

15. Pneumatique comprenant une composition de caoutchouc selon l'une quelconque des revendications 1 à 13.

## Patentansprüche

1. Kautschukzusammensetzung auf Basis von mindestens:
- einem Dienelastomer,
- einem verstärkenden Füllstoff,
- einem Vernetzungssystem,
- 1 bis 30 Gewichtsteilen pro hundert Gewichtsteile Elastomer, phe, Epoxidharz,
- zwischen 1 und 15 phe eines Amin-Härters mit mindestens zwei primären Aminfunktionen, die sich an mindestens einem sechsatomigen aromatischen Ring befinden, wobei der mindestens eine aromatische Ring
• mindestens eine primäre Aminfunktion und
• mindestens zwei Reste Ri, die gleich oder verschieden sind und aus der Gruppe bestehend aus linearen oder verzweigten C₁-C₆-Alkylresten, Halogenen, Ethern, tertiären Aminen, Thioethern, Ketonen, Estern und Amiden, die durch lineare oder verzweigte C₁-C₆-Alkylreste substituiert sind, ausgewählt sind,
derart umfasst, dass der mindestens eine sechsatomige aromatische Ring kein Wasserstoffatom in ortho-Position zu den primären Aminfunktionen umfasst,
- einem Imidazol der allgemeinen Formel (A) 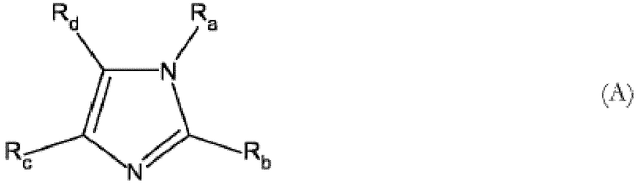 in der
• Rₐ für ein Wasserstoffatom oder eine Kohlenwasserstoffgruppe, die gegebenenfalls durch ein oder mehrere Heteroatome unterbrochen und/oder substituiert ist, steht,
• R_{b} für eine Kohlenwasserstoffgruppe steht,
• R_{c} und R_{d} unabhängig voneinander für ein Wasserstoffatom oder eine Kohlenwasserstoffgruppe, die gegebenenfalls durch ein oder mehrere Heteroatome unterbrochen und/oder substituiert ist, stehen,
• oder auch R_{c} und R_{d} zusammen mit den Kohlenstoffatomen des Imidazolrings, an den sie gebunden sind, einen Ring, der gegebenenfalls durch ein oder mehrere Heteroatome unterbrochen und/oder substituiert ist, bilden.

2. Kautschukzusammensetzung nach dem vorhergehenden Anspruch, wobei das Dienelastomer aus der Gruppe bestehend aus Polybutadienen, Naturkautschuk, synthetischen Polyisoprenen, Butadien-Copolymeren, Isopren-Copolymeren und Mischungen dieser Elastomere ausgewählt ist und vorzugsweise ein Isoprenelastomer ist.

3. Kautschukzusammensetzung nach einem der vorhergehenden Ansprüche, wobei das Epoxidharz aus aromatischen Epoxidharzen, alicyclischen Epoxidharzen und aliphatischen Epoxidharzen ausgewählt ist.

4. Kautschukzusammensetzung nach einem der vorhergehenden Ansprüche, wobei der Gehalt an Epoxidharz zwischen 10 und 25 phe, vorzugsweise zwischen 10 und 20 phe, liegt.

5. Kautschukzusammensetzung nach einem der vorhergehenden Ansprüche, wobei der mindestens eine sechsatomige aromatische Ring des Amin-Härters mindestens zwei Reste Ri umfasst, die gleich oder verschieden sind und aus der Gruppe bestehend aus linearen oder verzweigten C₁-C₆-Alkylresten, Halogenen, Ethern, tertiären Aminen und Thioethern, die durch lineare oder verzweigte C₁-C₆-Alkylreste substituiert sind, ausgewählt sind.

6. Kautschukzusammensetzung nach einem der vorhergehenden Ansprüche, wobei der mindestens eine sechsatomige aromatische Ring des Amin-Härters mindestens zwei Reste Ri umfasst, die gleich oder verschieden sind und aus der Gruppe bestehend aus linearen oder verzweigten C₁-C₆-Alkylresten ausgewählt sind.

7. Kautschukzusammensetzung nach einem der vorhergehenden Ansprüche, wobei der Gehalt an Amin-Härter in einem Bereich von 5 bis 10 phe, vorzugsweise von 2 bis 8 phe, liegt.

8. Kautschukzusammensetzung nach einem der vorhergehenden Ansprüche, wobei in dem Imidazol der allgemeinen Formel (A):
- Rₐ aus der Gruppe bestehend aus einem Wasserstoffatom, Alkylgruppen mit 1 bis 20 Kohlenstoffatomen, Cycloalkylgruppen mit 5 bis 24 Kohlenstoffatomen, Arylgruppen mit 6 bis 30 Kohlenstoffatomen oder Aralkylgruppen mit 7 bis 25 Kohlenstoffatomen, die gegebenenfalls substituiert sind, ausgewählt ist,
- R_{b} aus der Gruppe bestehend aus Alkylgruppen mit 1 bis 20 Kohlenstoffatomen, Cycloalkylgruppen mit 5 bis 24 Kohlenstoffatomen, Arylgruppen mit 6 bis 30 Kohlenstoffatomen oder Aralkylgruppen mit 7 bis 25 Kohlenstoffatomen ausgewählt ist,
- R_{c} und R_{d} unabhängig aus der Gruppe bestehend aus einem Wasserstoffatom, Alkylgruppen mit 1 bis 20 Kohlenstoffatomen, Cycloalkylgruppen mit 5 bis 24 Kohlenstoffatomen, Arylgruppen mit 6 bis 30 Kohlenstoffatomen oder Aralkylgruppen mit 7 bis 25 Kohlenstoffatomen, die gegebenenfalls substituiert sind, ausgewählt sind, oder auch R_{c} und R_{d} zusammen mit den Kohlenstoffatomen des Imidazolrings, an den sie gebunden sind, einen Ring, der aus aromatischen, heteroaromatischen oder aliphatischen Ringen mit 5 bis 12 Kohlenstoffatomen, vorzugsweise 5 oder 6 Kohlenstoffatomen, ausgewählt ist, bilden.

9. Kautschukzusammensetzung nach einem der vorhergehenden Ansprüche, wobei in dem Imidazol der allgemeinen Formel (A) Rₐ aus der Gruppe bestehend aus Alkylgruppen mit 2 bis 12 Kohlenstoffatomen und Aralkylgruppen mit 7 bis 13 Kohlenstoffatomen, die gegebenenfalls substituiert sind, ausgewählt ist.

10. Kautschukzusammensetzung nach einem der vorhergehenden Ansprüche, wobei in dem Imidazol der allgemeinen Formel (A) Rₐ aus der Gruppe bestehend aus Aralkylgruppen mit 7 bis 13 Kohlenstoffatomen, die gegebenenfalls substituiert sind, ausgewählt ist und R_{b} aus der Gruppe bestehend aus Alkylgruppen mit 1 bis 12 Kohlenstoffatomen ausgewählt ist.

11. Kautschukzusammensetzung nach einem der vorhergehenden Ansprüche, wobei in dem Imidazol der allgemeinen Formel (A) R_{c} und R_{d} unabhängig aus der Gruppe bestehend aus einem Wasserstoffatom und Alkylgruppen mit 1 bis 12 Kohlenstoffatomen, Cycloalkylgruppen mit 5 bis 8 Kohlenstoffatomen, Arylgruppen mit 6 bis 24 Kohlenstoffatomen und Aralkylgruppen mit 7 bis 13 Kohlenstoffatomen ausgewählt sind.

12. Kautschukzusammensetzung nach einem der vorhergehenden Ansprüche, wobei der Gehalt an Imidazol der allgemeinen Formel (A) in einem Bereich von 0,1 bis 5 phe liegt.

13. Kautschukzusammensetzung nach einem der vorhergehenden Ansprüche, wobei der Gehalt an verstärkendem Füllstoff in einem Bereich von 20 bis 200 phe, vorzugsweise von 30 bis 150 phe, liegt.

14. Kautschukerzeugnis oder -halbzeug, umfassend eine Kautschukzusammensetzung nach einem der vorhergehenden Ansprüche.

15. Reifen, umfassend eine Kautschukzusammensetzung nach einem der Ansprüche 1 bis 13.

## Claims

1. Rubber composition based on at least:
- a diene elastomer,
- a reinforcing filler,
- a crosslinking system,
- from 1 to 30 parts by weight, per hundred parts by weight of elastomer, phr, of an epoxy resin,
- between 1 and 15 phr of an amine hardener comprising at least two primary amine functions, located on at least one six-membered aromatic ring, said at least one six-membered aromatic ring comprising:
• at least one primary amine function, and
• at least two Ri radicals, which are identical or different, selected from the group consisting of linear or branched C1-C6 alkyl radicals, halogens, ethers, tertiary amines, thioethers, ketones, esters and amides, substituted by linear or branched C1-C6 alkyl radicals,
so that the at least one six-membered aromatic ring does not comprise a hydrogen atom located in the ortho position with respect to the primary amine functions,
- an imidazole of general formula (A) 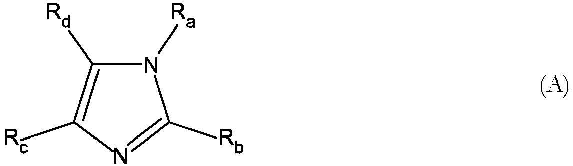 in which,
• Rₐ represents a hydrogen atom or a hydrocarbon group, optionally interrupted by one or more heteroatoms and/or substituted,
• R_{b} represents a hydrocarbon group,
• R_{c} and R_{d} represent, independently of one another, a hydrogen atom or a hydrocarbon group, optionally interrupted by one or more heteroatoms and/or substituted,
• or else R_{c} and R_{d} form, together with the carbon atoms of the imidazole ring to which they are attached, a ring optionally interrupted by one or more heteroatoms and/or substituted.

2. Rubber composition according to the preceding claim, in which the diene elastomer is selected from the group consisting of polybutadienes, natural rubber, synthetic polyisoprenes, butadiene copolymers, isoprene copolymers, and mixtures of these elastomers and is preferentially an isoprene elastomer.

3. Rubber composition according to either one of the preceding claims, in which the epoxy resin is selected from aromatic epoxy, alicyclic epoxy and aliphatic epoxy resins.

4. Rubber composition according to any one of the preceding claims, in which the content of the epoxy resin is between 10 and 25 phr, preferably between 10 and 20 phr.

5. Rubber composition according to any one of the preceding claims, in which the at least one six-membered aromatic ring of the amine hardener comprises at least two Ri radicals, which are identical or different, selected from the group consisting of linear or branched C1-C6 alkyl radicals, halogens and ethers, tertiary amines and thioethers, substituted by linear or branched C1-C6 alkyl radicals.

6. Rubber composition according to any one of the preceding claims, in which the at least one six-membered aromatic ring of the amine hardener comprises at least two Ri radicals, which are identical or different, selected from the group consisting of linear or branched C1-C6 alkyl radicals.

7. Rubber composition according to any one of the preceding claims, in which the content of amine hardener is within a range extending from 5 to 10 phr, preferably from 2 to 8 phr.

8. Rubber composition according to any one of the preceding claims, in which, in the imidazole of general formula (A):
- Rₐ is selected from the group consisting of a hydrogen atom, alkyl groups having from 1 to 20 carbon atoms, cycloalkyl groups having from 5 to 24 carbon atoms, aryl groups having from 6 to 30 carbon atoms, aralkyl groups having from 7 to 25 carbon atoms, which are optionally substituted,
- R_{b} is selected from the group consisting of alkyl groups having from 1 to 20 carbon atoms, cycloalkyl groups having from 5 to 24 carbon atoms, aryl groups having from 6 to 30 carbon atoms or aralkyl groups having from 7 to 25 carbon atoms,
- R_{c} and R_{d} are independently selected from the group consisting of a hydrogen atom, alkyl groups having from 1 to 20 carbon atoms, cycloalkyl groups having from 5 to 24 carbon atoms, aryl groups having from 6 to 30 carbon atoms or aralkyl groups having from 7 to 25 carbon atoms, which are optionally substituted, or else R_{c} and R_{d} form, together with the carbon atoms of the imidazole ring to which they are attached, a ring selected from aromatic, heteroaromatic or aliphatic rings, comprising from 5 to 12 carbon atoms, preferably 5 or 6 carbon atoms.

9. Rubber composition according to any one of the preceding claims, in which, in the imidazole of general formula (A), Rₐ is selected from the group consisting of alkyl groups having from 2 to 12 carbon atoms and aralkyl groups having from 7 to 13 carbon atoms, which are optionally substituted.

10. Rubber composition according to any one of the preceding claims, in which, in the imidazole of general formula (A), Rₐ is selected from the group consisting of aralkyl groups having from 7 to 13 carbon atoms, which are optionally substituted, and R_{b} is selected from the group consisting of alkyl groups having from 1 to 12 carbon atoms.

11. Rubber composition according to any one of the preceding claims, in which, in the imidazole of general formula (A), R_{c} and R_{d} are independently selected from the group consisting of a hydrogen atom and alkyl groups having from 1 to 12 carbon atoms, cycloalkyl groups having from 5 to 8 carbon atoms, aryl groups having from 6 to 24 carbon atoms and aralkyl groups having from 7 to 13 carbon atoms.

12. Rubber composition according to any one of the preceding claims, in which the content of imidazole of general formula (A) is within a range extending from 0.1 to 5 phr.

13. Rubber composition according to any one of the preceding claims, in which the content of reinforcing filler is within a range extending from 20 to 200 phr, preferably from 30 to 150 phr.

14. Finished or semi-finished rubber article comprising a rubber composition according to any one of the preceding claims.

15. Tyre comprising a rubber composition according to any one of Claims 1 to 13.
